(19) Europäisches Patentamt
European Patent Office
Office européen des brevets

(11) **EP 2 345 695 B1**

(12) **EUROPÄISCHE PATENTSCHRIFT**

(45) Veröffentlichungstag und Bekanntmachung des Hinweises auf die Patenterteilung:
**06.06.2012 Patentblatt 2012/23**

(51) Int Cl.:
*C08L 21/00* (2006.01)     *C08L 23/16* (2006.01)
*C08L 23/10* (2006.01)     *C08L 9/00* (2006.01)

(21) Anmeldenummer: **11000110.4**

(22) Anmeldetag: **10.01.2011**

(54) **Elastomermodifizierte thermoplastische Zusammensetzung**

Elastomer-modified thermoplastic compound

Composition thermoplastique modifiée par élastomère

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.01.2010 DE 102010004238**
**02.02.2010 DE 102010006720**

(43) Veröffentlichungstag der Anmeldung:
**20.07.2011 Patentblatt 2011/29**

(73) Patentinhaber: **Fraunhofer-Gesellschaft zur Förderung der angewandten Forschung e.V.**
**80686 München (DE)**

(72) Erfinder:
• **Hintemann, Damian**
**48703 Stadtlohn (DE)**
• **Wack, Holger**
**44137 Dortmund (DE)**
• **Bertling, Jürgen**
**44269 Dortmund (DE)**

(74) Vertreter: **Gesthuysen, Michael**
**Gesthuysen, von Rohr & Eggert**
**Huyssenallee 100**
**45128 Essen (DE)**

(56) Entgegenhaltungen:
EP-A1- 0 976 783       EP-A1- 1 845 027
WO-A1-97/39059        DE-A1-102006 014 985
US-A- 6 147 160        US-A1- 2001 003 768
US-A1- 2006 241 234    US-A1- 2008 103 244
US-A1- 2009 270 545

## Beschreibung

Die vorliegende Erfindung betrifft eine elastomerpulvermodifizierte thermoplastische Zusammensetzung mit den Oberbegriffsmerkmalen von Anspruch 1. Darüber hinaus betrifft die Erfindung ein Verfahren zur Herstellung einer elastomerpulvermodifizierten thermoplastischen Zusammensetzung mit den Oberbegriffsmerkmalen von Anspruch 7. Schließlich betrifft die vorliegende Erfindung ein aus einer Zusammensetzung der vorgenannten Art hergestelltes technisches Halb- oder Fertigfabrikat, insbesondere einen Reifen, eine Rolle, ein Dichtungsprofil, eine Abdichtungsfolie oder -bahn oder ein Dämpfungselement, und ein Verschleißmaterial.

Zusammensetzungen der vorgenannten Art können in Bereichen eingesetzt werden, wo kostengünstige Alternativen zu reinen Elastomeren, thermoplastischen Elastomeren oder schlagzäh modifizierten Thermoplasten benötigt werden. Die in Rede stehenden Zusammensetzungen können aufgrund ihrer Eigenschaften in erster Linie thermoplastische Vulkanisate (TPE-V) oder Standard-Gummiprodukte, wie beispielsweise Ethylen-Propylen-Dien-Kautschuke (EPDM) substituieren. Elastomerpulvermodifizierte Thermoplaste (EPMT) lassen sich im Vergleich zu Elastomeren und thermoplastischen Elastomeren kostengünstig herstellen und sind auf Extrusions- oder Spritzgießmaschinen thermoplastisch verarbeitbar. Dabei können zur Herstellung von EPMTs bereits vernetzte Elastomerpulver, hergestellt zumeist aus Elastomerreststoffen, eingesetzt werden, die Partikelgrößen von ca. 100 bis 600 $\mu$m aufweisen können und beim Schmelzemischen weitgehend unverändert erhalten bleiben. Darüber hinaus sind EPMTs recyclingfähig. Das in Rezepturen von EPMTs enthaltene Elastomermaterial kann aus dem Recycling von Gummiprodukten gewonnen werden, was zu geringen Herstellungskosten von EPMTs beiträgt.

Aus dem Stand der Technik sind bereits Verfahren zur Herstellung von TPE-ähnlichen Zusammensetzungen bekannt. Die DE 295 15 721 U 1 betrifft Thermoplaste, die mit vermahlenem Gummi modifiziert worden sind und entweder als TPE-Ersatzmaterial dienen oder als schlagzäh modifizierter Thermoplast Verwendung finden. Dabei sind die feindisperse Verteilung des Gummimehls und seine Anbindung an die Thermoplastmatrix, realisiert durch Peroxidzusatz oder Säurefunktionalisierung des Thermoplasts zwecks Erreichung der erforderlichen Oberflächenspannung, entscheidend. Um den unter diesen Bedingungen zu erwartenden Polymerabbau des Thermoplasts zu verhindern, werden Antioxidantien hinzugegeben, die andererseits den Nachteil haben, die Radikalausbeute des Peroxids deutlich herabzusetzen. Da aber das Gummimehl im Gegensatz zum Thermoplast nicht säurefunktionalisiert ist oder in einer anderen zwecks chemischer Anbindung geeigneten modifizierten Form vorliegt, erreichen die mechanischen Kennwerte des Thermoplast-Gummi-Systems kein befriedigendes Niveau.

Ein Verfahren zum Herstellen von TPE-ähnlichen Zusammensetzungen ist darüber hinaus aus der DE 196 07 281 A1 bekannt. Bei diesem Verfahren wird zum werkstofflichen Recycling von Alt- und Abfallgummi ein Gummimehl auf Basis des Alt- und Abfallgummis mit Thermoplasten und einem oder mehreren Vernetzungsmitteln in unterschiedlichen Massenverhältnissen im Prozeß des Schmelzemischens zu einer Zusammensetzung (Compound) mit TPE-ähnlichen Eigenschaften verarbeitet, wobei beim Schmelzemischen die Thermoplastkomponente aufgeschmolzen und nachfolgend die Elastomer-und/oder die Thermoplastkomponente dynamisch stabilisiert werden. Beim Prozeß der dynamischen Stabilisation vernetzen die Polymere durch die Dynamik des Mischprozesses, was mit einer Änderung der Morphologie der Polymere einhergeht. Das Gummimehl wird in die Thermoplastmatrix eingebunden bzw. in dieser verteilt. Es entsteht somit eine Zusammensetzung (Compound) aus Alt- und Abfallgummimehl, Thermoplast und Vernetzer(n). Die nach diesem Verfahren hergestellten Halbzeuge oder Formteile zeigen jedoch eine sehr geringe Reiß- oder Bruchdehnung, wobei die nach dem bekannten Verfahren erhältlichen TPE-ähnlichen Werkstoffe nicht uneingeschränkt der Definition nach DIN 7724 entsprechen.

Die DE 199 23 758 A1 beschreibt die Herstellung von thermoplastischen Vulkanisaten unter Verwendung von Alt- bzw. Abfallgummimehlen, die mit Peroxiden gequollen und mittels Mischprozeß in einem Thermoplast verteilt worden sind. Trotz Ausbildung von Radikalen und somit dem Erhalt schwacher chemischer Bindungen an der Elastomer-Thermoplast-Phasengrenze ist die Phasenanbindung gering und sehr starr, weshalb es - insbesondere durch den Peroxideinsatz - in der Thermoplastmatrix zu Kettenbrüchen kommen kann, die das mechanische Kennwertniveau entscheidend beeinträchtigen.

In der EP 1 627 014 B 1 werden Elastomerlegierungen beschrieben, welche aus Altreifen oder Gummiabfällen hergestelltes Gummimehl, einen Hauptthermoplasten und ein Dispergierungsmittel oder einen Emulgator aufweisen, wobei der Anteil des Gummimehls wenigstens 30 % bis maximal 60 % beträgt und wobei das Gummimehl eine maximale Partikelgröße von 600 $\mu$m aufweist, mittels eines Kaltmahlverfahrens hergestellt und nicht chemisch vorbehandelt ist. Der Hauptthermoplast kann aus der Gruppe der Polyethylene oder Polyurethane ausgewählt sein. Die aus der bekannten Elastomerlegierung hergestellten Halb- und Fertigfabrikate weisen ebenfalls eine vergleichsweise geringe Reißdehnung auf.

Die DE 10 2006 014 985 A1 betrifft schließlich ein mittels Compoundieren herstellbares thermoplastisches Vulkanisat auf Basis von Blend-Zusammensetzungen bestehend aus 10 bis 90 Gew.-% eines olefinischen Thermoplasts, wobei zumindest ein Anteil in chemisch modifizierter (funktionalisierter) Form eingesetzt wird, und 10 bis 90 Gew.-% eines chemisch modifizierten (funktionalisierten) feinteiligen Gummimehls. Bei der Compoundierung des aus den drei Komponenten bestehenden TPV-Systems kommt es durch die annähernd gleiche Oberflächenspannung des in chemisch modifizierter Form eingesetzten Thermoplasts und des chemisch modifizierten Gummimehls zu einer feindispersen Verteilung des Gummimehls. Die Angleichung der Oberflächenspannung des Gummimehls und des modifizierten Thermoplasts basiert auf der Säurefunktionalisierung beider Komponenten. Gleichzeitig reagieren die polaren Gruppen des Gummimehls und des modifizierten Thermoplasten untereinander unter Ausbildung einer chemischen Bindung. Durch diese Maßnahme soll erreicht werden, dass das Gummimehl fein verteilt und die Elastomerphase durch chemische Bindungen an die Thermoplastmatrix angekoppelt wird. Die mechanischen Kennwerte des zuvor beschriebenen TPV-Systems erreichen ebenfalls kein befriedigendes Niveau. Auch bei hohen Gummimehlanteilen weisen die TPV-Systeme eine nur geringe Reißdehnung bei hohen Shore-Härten von mehr als 90 Shore-A auf.

Das Dokument EP 1 885 027 A1 betrifft die Herstellung einer Zusammensetzung aus einem thermoplastischen Material und einem thermoplastischen nicht vernetzten Gummi. Gemäß diesem Dokument ist die Verwendung eines vernetzten Gummis nachteilig, da die Vernetzung zu einer Kontraktion führen soll, was verschlechterte Adhäsionseigenschaften der Zusammensetzung zur Folge hat.

Das Dokument US 2008/0103244 A1 betrifft eine thermoplastische Elastomerzusammensetzung mit einer Shore-Härte von 55 bis 85 A und guten Adhäsionseigenschaften an metallischen Oberfläcen, erhältlich durch Mischen eines thermoplastischen Materials mit einem thermoplastischen Vulkanisat. Die Herstellung des thermoplastischen Vulkanisats erfolgt herkömmlich durch dynamische Vulkanisation. Es ist lediglich die Härte des thermoplastischen Vulkanisats angegeben.

Das Dokument US 2001/03768 A1 betrifft die Herstellung eines thermoplastischen Vulkanisats aus einem thermoplastischen Polypropylen, einem nicht vernetzten Gummi und einem thermoplastischen Copolymer, wobei die Vernetzung des Gummis während des Herstellungsprozesses durch dynamische Vulkanisation erfolgt.

Aus der US 2009/0270545 A1 ist bekannt, thermoplastische Polyolefine und/oder thermoplastische Vulkanisate mit einem thermoplastischen Copolymer zu mischen.

Die EP 0 976 783 A1 betrifft die Herstellung eines thermoplastischen Elastomers durch dynamische Vulkanisation einer Mischung von Polypropylen, Polymethylpenten und einem nicht vernetzten Gummi, wobei zur Vernetzung des Gummis ein Vernetzungsmittel hinzugegeben wird. Es sind lediglich Härten der Gesamtzusammensetzung offenbart.

Die US 6,147,160 A offenbart ein Verfahren zur Herstellung eines thermoplastischen Elastomers bzw. Vulkanisats, wobei auch hier vorzugsweise die Vernetzung des Gummimaterials durch dynamische Vulkanisation während des Herstellungsprozesses erfolgen soll.

Aus der WO 97/39059 A1 geht ein thermoplastisches Elastomer hervor, das aus einem Gummi und einem Thermoplasten erhältlich ist, wobei der Gummi in dem thermoplastischen Elastomer zumindest teilweise vernetzt ist. Die Vernetzung kann dynamisch erfolgen, vorzugsweise in Gegenwart von Vernetzungsmitteln.

Die US 2006/241234 A1 beschreibt eine thermoplastische Elastomermischung, die ein thermoplastisches Polyolefin und ein dynamisch vulkanisiertes Elastomer aufweisen soll. Die dynamische Vulkanisation umfasst die Behandlung einer Mischung aus wenigstens einem thermoplastischen Polyolefin und dem Elastomer in einem Kneter und die Vulkanisation des Elastomers während der Behandlung im Kneter. Alternativ kann auch vorgesehen sein, die thermoplastische Elastomerzusammensetzung in einem Mischer unter Zufuhr eines Vernetzungsmittels herzustellen.

Der Erfindung liegt die Aufgabe zugrunde, eine Zusammensetzung der eingangs genannten Art und ein Verfahren zur Herstellung einer solchen Zusammensetzung sowie ein aus einer Zusammensetzung der eingangs genannten Art hergestelltes technisches Halb- oder Fertigfabrikat zur Verfügung zu stellen, wobei die Zusammensetzung bzw. das aus der Zusammensetzung hergestellte Halb- oder Fertigfabrikat den thermoplastischen Elastomeren ähnliche mechanische Eigenschaften aufweisen soll. Insbesondere soll die Zusammensetzung bzw. ein aus der Zusammensetzung hergestelltes Halb- oder Fertigfabrikat eine höhere Bruchdehnung und eine geringere Shore-Härte als die bekannten TPE-ähnlichen Zusammensetzungen bzw. die daraus hergestellten Halb- oder Fertigfabrikate aufweisen.

Zur Lösung der vorgenannten Aufgabe ist erfindungsgemäß bei einer Zusammensetzung der eingangs genannten Art vorgesehen, dass das Elastomermaterial ausgewählt ist aus der Gruppe von Elastomermaterialien mit einer zur Härte des Matrixmaterials ähnlichen oder identischen Härte, wobei die Härte des Elastomermaterials der allgemeinen Beziehung (I)

$$[X] - [Z] \leq [Y] \leq [X] + [Z] \qquad (I)$$

genügt, wobei

- [Y] die Shore-Härte des Elastomermaterials nach DIN 53505, angegeben in Shore-A, bezeichnet

- [X] die Shore-Härte des Matrixmaterials nach DIN 53505, angegeben in Shore-A, bezeichnet und

- [Z] die Abweichung zwischen der Shore-Härte des Elastomermaterials und der Shore-Härte des Matrixmaterials, jeweils angegebenen in Shore-A, bezeichnet mit [Z] ≤ 20, insbesondere bevorzugt [Z] ≤ 10.

Verfahrensgemäß ist dementsprechend vorgesehen, dass das Elastomermaterial ausgewählt wird aus der Gruppe von Elastomermaterialien mit einer zur Härte des Matrixmaterials ähnlichen oder identischen Härte, wobei die Härte des Elastomermaterials der vorgenannten allgemeinen Beziehung (I) genügen soll. Darüber hinaus sollten vorzugsweise solche Elastomermaterialien eingesetzt werden, die eine hohe chemische Affinität zum Thermoplastmaterial bzw. zum Matrixbildner aufweisen. Wird beispielsweise als Matrixmaterial Polypropylen (PP) eingesetzt, so kann als Elastomermaterial vorzugsweise Ethylen-Propylen-Dien-Kautschuk (EPDM) eingesetzt werden.

Die erfindungsgemäße Zusammensetzung bzw. Formulierung weist eine deutlich höhere Bruch- bzw. Reißdehnung bei einer deutlich geringeren Shore-Härte auf als die aus dem Stand der Technik bekannten Zusammensetzungen. In diesem Zusammenhang erfolgt die Bestimmung der Bruch- bzw. Reißdehnung nach DIN ISO 527-3. Die erfindungsgemäße Zusammensetzung läßt die Herstellung von technischen Halb- oder Fertigfabrikaten mit einer Shore-Härte nach DIN 53505 zwischen 30 bis 80 Shore-A, vorzugsweise mit einer Härte von 40 bis 70 Shore-A, weiter vorzugsweise bis 60 Shore-A, zu, wobei die Halb- oder Fertigfabrikate eine Bruch- oder Reißdehnung von mehr als 300 %, vorzugsweise mehr als 500 %, insbesondere mehr als 700 % aufweisen können, und zwar insbesondere bei einem Anteil von in dem Matrixmaterial eingebundenem Elastomermaterial von 50 bis 80 Gew.-%. Dies läßt insbesondere die Herstellung von Reifen und Rollen, Dichtungsprofilen und Abdichtungsfolien/-bahnen und Dämpfungselementen mit verbesserten mechanischen Kennwerten zu. Zudem erfüllt die erfindungsgemäße Zusammensetzung die Anforderungen der DIN 7724 an TPE-Werkstoffe.

Im Rahmen der Entwicklung von elastomerpulverbasierten Materialien hat sich im Zusammenhang mit der Erfindung überraschenderweise gezeigt, dass durch die Auswahl von Matrix- und Elastomermaterialien, deren Härten lediglich in einem bestimmten Bereich voneinander abweichen, entscheidend auf die Härte der TPE-ähnlichen Zusammensetzung bzw. der daraus hergestellten Halb- oder Fertigfabrikate Einfluss genommen werden kann. Bei hohen gewünschten Zumischungsanteilen an Elastomermaterial lassen sich verbesserte mechanische Kennwerte der Zusammensetzung, insbesondere eine höhere Bruch- bzw. Reißdehnung und eine deutlich geringere Shore-Härte, dann erreichen, wenn die Härte des Elastomermaterials der Härte des Matrixmaterials weitgehend entspricht bzw. die Härten von Elastomermaterial und Matrixmaterial möglichst weit angenähert sind. Der aus dem Stand der Technik bekannte Einsatz von in der Härte weitgehend undefinierten und oftmals verunreinigten Elastomermaterialien, beispielsweise aus dem Autoreifenrecycling, ist dagegen nicht zielführend und führt zu Materialien mit gegenüber der erfindungsgemäßen Zusammensetzung nicht befriedigenden mechanischen Kennwerten. Die Erfindung sieht somit erstmals im Stand der Technik die gezielte Auswahl von Matrix- und Elastomermaterialien für eine elastomermodifizierte thermoplastische Zusammensetzung in Abhängigkeit von einer vorgegebenen Härteabwicklung der Materialien vor.

Die erfindungsgemäße Zusammensetzung kann in einem kontinuierlichen Extruder (gleich- oder gegenläufige Doppelschnecke oder CoKneter) hergestellt werden. Eine Batchmischweise in einem Innenmischer oder Kalander ist möglich, aber nicht erforderlich. Vorzugsweise liegen die Verarbeitungstemperaturen im Bereich von 140 bis 250 °C bei Mischungszeiten von 30 sec. bis 10 min, wobei alle ganzzahligen Zwischenwerte in den vorgenannten Intervallgrenzen als im Rahmen der Erfindung offenbart anzusehen sind.

Bei einer bevorzugten Ausführungsform kann der Anteil des Elastomermaterials in der Zusammensetzung zwischen 20 bis 85 Gew.-%, vorzugsweise 50 bis 75 Gew.-%, betragen, wobei alle ganzzahligen Zwischenwerte in den vorgenannten Intervallgrenzen als im Rahmen der Erfindung offenbart anzusehen sind. Das Elastomermaterial weist vorzugsweise eine Shore-Härte nach DIN 53505 von 30 bis ca. 70 A auf, wobei alle ganzzahligen Zwischenwerte in den vorgenannten Intervallgrenzen als im Rahmen der Erfindung offenbart anzusehen sind. Grundsätzlich kann die Shore-Härte des Elastomermaterials aber auch größer als 70 A, insbesondere größer als 80 A, weiter insbesondere bis 90 A, sein, wobei alle ganzzahligen Zwischenwerte in den vorgenannten Intervallgrenzen als im Rahmen der Erfindung offenbart anzusehen sind. Dabei kann das Elastomermaterial ausgewählt sein aus der Gruppe der Olefin-Dien-Kautschuke, insbesondere Ethylen-Propylen-Dien-Kautschuke (EPDM), und/oder der Styrol-Butadien-Kautschuke (SBR) und/oder der Naturkautschuke (NR) und/oder deren Mischungen.

Als Grundwerkstoffe für das Elastomermaterial, was vorzugsweise pulverförmig durch Schmelzemischen in das thermoplastische Matrixmaterial eingebunden wird, können vorzugsweise sortenreine EPDM-Elastomerpulver, beispielsweise aus Produktionsresten von Technischen-Elastomer-Erzeugnissen (TEE), sortenreine NR/SBR-Elastomerpulver, beispielsweise aus Produktionsresten von Technischen-Elastomer-Erzeugnissen (TEE) oder aus abgeschälten Lkw-Laufflächen (Protektor-Schichten), und/oder SBR-Gummimehle aus Produktionsresten, beispielsweise aus Produktionsresten von Technischen-Elastomer-Erzeugnissen (TEE), eingesetzt werden. Durch den Einsatz von sortenreinen Elastomermaterialien, d. h. Elastomermaterialien, die chemisch/physikalisch definiert sind und einer bestimmten Produktklasse - beispielsweise Dichtungsprofilen - angehören, kann sichergestellt werden, dass das zur Herstellung der erfindungsgemäßen Zusammensetzung eingesetzte Elastomermaterial eine vorgegebene zur Härte des Matrixmaterials ähnliche oder identische Härte aufweist und der oben angegebenen allgemeinen Beziehung (I) genügt. Die Erfindung läßt es in diesem Zusammenhang zu, verschiedene sortenreine Elastomerpulver mit unterschiedlichen Härtegraden miteinander zu vermischen, um ein Elastomermaterial bereitzustellen, das eine der oben angegebenen allgemeinen Beziehung (I) genügende Härte aufweist. Dadurch lassen sich gezielt die mechanischen Eigenschaften der so erhältlichen erfindungsgemäßen Zusammensetzung bzw. der daraus hergestellten Halb- oder Fertigfabrikate beeinflussen.

Bei Einsatz von Elastomerpulvern auf Basis von NR SBR können erfindungsgemäß TPV-ähnliche Materialien erzeugt werden, die eine Bruchdehnung von über 300 % aufweisen. Bei Einsatz von Elastomerpulvern auf Basis von EPDM sind Bruch- bzw. Reißdehnungen von über 700 % möglich. Gleichzeitig werden durch die erfindungsgemäße Zusammensetzung erstmalig elastomerpulverbasierte Werkstoffe erhalten, die Härten im Bereich von 40 bis 70 Shore-A aufweisen können bei einem Elastomerpulveranteil in der Rezeptur von 50 bis 80 Gew.-%, wobei alle ganzzahligen Zwischenwerte in den vorgenannten Intervallgrenzen als im Rahmen der Erfindung offenbart anzusehen sind.

Pulverförmiges Elastomermaterial kann sowohl durch ambiente als auch durch kryogene Mahlverfahren gewonnen werden. Die Korngröße der eingesetzten Elastomerpulver kann zwischen 100 bis 600 $\mu$m, vorzugsweise weniger als 400 $\mu$m, betragen, wobei alle ganzzahligen Zwischenwerte in den vorgenannten Intervallgrenzen als im Rahmen der Erfindung offenbart anzusehen sind.

Überraschenderweise hat sich im Zusammenhang mit der Erfindung auch gezeigt, dass durch den Einsatz von auf die Härte des Matrixmaterials abgestimmten Elastomermaterialien die Zugabe von Kopplungsmitteln (Kompatibilisatoren) und/oder Vernetzungsmitteln beim Schmelzemischen nicht erforderlich ist, um Zusammensetzungen mit TPE-ähnlichen Eigenschaften und verbesserten mechanischen Kennwerten zu erhalten. Der Verzicht auf die Zugabe von Kopplungsmitteln und/oder Vernetzungsmitteln trägt zu einer Vereinfachung des Herstellungsverfahrens und zu einer Senkung der Herstellungskosten bei. Zur Verwirklichung der speziellen Kundenwünsche, angepaßt an die jeweiligen konkreten Einsatzbedingungen, ist die Zugabe von Additiven vor oder während des Schmelzmischprozesses jedoch grundsätzlich nicht ausgeschlossen. Insbesondere können Additive wie Fließhilfsmittel, Farbstoffe bzw. Pigmente, Weichmacher, Harze, Frischkautschuk und Kautschukmischungen, grundsätzlich aber auch Vernetzer und/oder Kompatibilisatoren, als Additive eingesetzt werden.

Ein alternativer Lösungsweg der Erfindung sieht zur Lösung der oben genannten Aufgabe bei einer elastomermodifizierten thermoplastischen Zusammensetzung der eingangs genannten Art vor, dass das thermoplastische Matrixmaterial gebildet wird durch einen Hauptthermoplasten und gegebenenfalls wenigstens einen Zusatzthermoplasten, wobei der Hauptthermoplast ausgewählt ist aus der Gruppe der thermoplastischen Elastomere auf Olefinbasis in vollvernetzter, teil- oder nichtvernetzter Ausbildung, wobei, vorzugsweise, ein thermoplastisches Elastomer auf Basis von (isotaktischem) Polypropylen und Ethylen-Propylen-Dien-Kautschuk (PP/EPDM) eingesetzt wird, und/oder wobei der gegebenenfalls wenigstens eine Zusatzthermoplast ausgewählt ist aus der Gruppe der Polyolefine, insbesondere der Polypropylene (PP). Die Erfindung sieht erstmals im Stand der Technik das Schmelzemischen von thermoplastischen Elastomeren auf Olefinbasis mit vorzugsweise pulverförmigen Elastomermaterialien vor, um eine TPE-ähnliche Zusammensetzung mit gegenüber den als Matrixmaterial eingesetzten TPE-Materialien verbesserten mechanischen Eigenschaften bereitzustellen. Es hat sich überraschenderweise gezeigt, dass durch den Einsatz von thermoplastischen Elastomeren als Matrixmaterialien Zusammensetzungen erhalten werden, die im Vergleich zu den eingesetzten TPEs höhere Bruch- bzw. Reißdehnungen bei geringeren Shore-Härten aufweisen. Insbesondere kann durch den Einsatz von nicht vernetzten thermoplastischen Elastomeren (TPE-O) und auf die Härte des eingesetzten TPE-O abgestimmten Elastomerpulvern beim Prozeß des Schmelzemischens vollständig auf die Zugabe von Vernetzungsmitteln oder Kopplungsmitteln (Kompatibilisatoren) verzichtet werden. Grundsätzlich können auch teil- oder nahezu vollständig vernetzte thermoplastische Elastomere bzw. thermoplastische Vulkanisate (TPE-V) als Matrixmaterialien eingesetzt werden. Ein Zusatzthermoplast kann während des Schmelzemischprozesses zugegeben werden, um die mechanischen Eigenschaften der erhältlichen Zusammensetzung zu beeinflussen. Grundsätzlich ist jedoch auch die Herstellung der erfindungsgemäßen Zusammensetzung durch Schmelzemischen lediglich von einem thermoplastischen Elastomermaterial (TPE-O oder TPE-V) als Matrixmaterial mit einem Elastomermaterial ohne Zugabe eines Zusatzthermoplasten möglich und vorteilhaft.

Es versteht sich, dass die angegebenen Härten von Elastomermaterial und Matrixmaterial jeweils auf den eingesetzten Grundwerkstoff bezogen sind. Wird das Matrixmaterial durch lediglich einen Hauptthermoplasten gebildet, so bezieht sich die Härte des Matrixmaterials auf die Härte des Hauptthermoplasten. Es versteht sich, dass bei einem aus mehreren Hauptthermoplasten und/oder gegebenenfalls wenigstens einem Zusatzthermoplasten gebildeten Matrixmaterial die der allgemeinen Beziehung (I) zugrundeliegende Härte des Matrixmaterials bezogen ist auf die Härte der das Matrixmaterial bildenden thermoplastischen Mischung aus den mehreren Hauptthermoplasten und gegebenenfalls dem wenigstens einen Zusatzthermoplasten.

Der Anteil des Hauptthermoplasten kann in der erfindungsgemäßen Zusammensetzung zwischen 5 bis 70 Gew.-%, vorzugsweise bis 50 Gew.-%, betragen, wobei alle ganzzahligen Zwischenwerte in den vorgenannten Intervallgrenzen als im Rahmen der Erfindung offenbart anzusehen sind. Der Hauptthermoplast kann eine Shore-Härte nach DIN 53505 von weniger als 90 Shore-A (was einer Shore-Härte von weniger als ca. 40 Shore-D entspricht), vorzugsweise weniger als 80 Shore-A, weiter vorzugsweise von weniger als 50 Shore-A, besonders bevorzugt von ca. 40 Shore-A, aufweisen, wobei alle ganzzahligen Zwischenwerte in den vorgenannten Intervallgrenzen als im Rahmen der Erfindung offenbart anzusehen sind. Der Anteil des Zusatzthermoplasten in der Zusammensetzung kann bis 50 Gew.-%, vorzugsweise bis 30 Gew.-%, betragen, wobei alle ganzzahligen Zwischenwerte in den vorgenannten Intervallgrenzen als im Rahmen der Erfindung offenbart anzusehen sind. Grundsätzlich ist es auch möglich, dass kein Zusatzthermoplast eingesetzt wird.

Als Hauptthermoplast kann ein TPE-O mit der Handelsbezeichnung "Softell" mit einer Shore-Härte von kleiner oder gleich 75 Shore-A oder mit der Handelsbezeichnung "Adflex" mit einer Shore-Härte von kleiner oder gleich 30 Shore-D eingesetzt werden, wobei auch konventionelle Polypropylen-Typen beigemischt werden können. Die genannten TPE-O sind sogenannte Catalloy-Produkte des Unternehmens Lyondellbasell. Alternativ sind auch ähnliche Produkte, wie beispielsweise die sogenannten Engage-Typen des Unternehmens Dow, einsetzbar.

Insbesondere kann als Hauptthermoplast "Softell TKS 204 D" der Basell Polyolefins Company eingesetzt werden, das eine Dichte von 0,89 g/cm$^3$ (ISO 1183) und eine Schmelzflußrate (230°C / 2,16 kg) von 13,2 g/10 min. (ISO 1133) aufweist. Das Biegemodul (Flexural Modulus Secant) kann einen Wert von 24 MPa (ISO 178) aufweisen. Die Bruchdehnung (Elongation at Break bei 50 mm/min.) kann mehr als 600 % betragen (ISO 527-1, -2). Die Shore-Härte beträgt ca. 75 Shore-A (ISO 868).

Als Hauptthermoplast kann im Übrigen "Adflex X 100 G" der Firma Basell eingesetzt werden mit einer Dichte von 0,89 g/cm$^3$ (ISO 1183) und einer Schmelzflußrate (230°C / 2,16 kg) von 8,0 g/10 min. (ISO 1133). Das Biegemodul (Flexural Modulus) kann einen Wert von 80 MPa (ISO 178) annehmen. Die Streckspannung (Tensile Stress at Yield) kann 5 MPa (ISO 527-1, -2) und die Bruchdehnung (Tensile Strain at Break) 500 % (ISO 527-1, -2) betragen. Die Kerbschlagzähigkeit (Notched Izod Impact Strength bei - 40°C, Typ 1, Notch A) kann 40 kJ/m$^2$ (ISO 180) betragen. Die Shore-Härte beträgt ca. 30 Shore-D (ISO 868). Die Vicat-Erweichungstemperatur (A50 (50°C/h 10N) beträgt ca. 55°C (ISO 306).

Die erfindungsgemäße Zusammensetzung eignet sich durch den hohen Elastomeranteil und sehr gute Traktionseigenschaften, hervorgerufen durch geringe Shore-Härten, insbesondere zum Einsatz als Verschleißkomponente. Anwendungsbeispiele sind hier Rollen von Förderbändern, Auskleidungen von Rohren und Behältern, Reifen von Transportgeräten oder dergleichen.

Durch die thermoplastischen Eigenschaften ist die erfindungsgemäße Zusammensetzung dazu geeignet, auch über 2-Komponenten-Spritzgußverfahren verarbeitet zu werden, so dass es möglich ist, die Zusammensetzung als Verschleißkomponente direkt an Trägerkomponenten, beispielsweise eine Förderbandrolle, anzuspritzen. Darüber hinaus läßt sich die Zusammensetzung nach Ende der Einsatzdauer leicht wieder von der Trägerkomponente entfernen bzw. demontieren, so dass eine anschließende Neuausrüstung der Trägerkomponente mit der Zusammensetzung ebenfalls einfach zu realisieren ist. Im Gegensatz zu Formteilen aus Elastomeren sind Formteile aus der erfindungsgemäßen Zusammensetzung recyclebar und können, zerkleinert zu Granulaten, erneut bei der Produktion von Neuteilen eingesetzt werden.

Es versteht sich, dass erfindungsgemäß alle Zwischenwerte der vorgenannten Bereichsangaben als offenbart anzusehen sind, selbst wenn diese nicht ausdrücklich genannt sind.

Eine mögliche Grundrezeptur der erfindungsgemäßen Zusammensetzung kann gemäß der nachfolgend angegebenen Tabelle eingestellt werden:

| Mischungskomponente | min. [Gew.-%] | max. [Gew.-%] | min. ideal [Gew.-%] | max. ideal [Gew.-%] |
|---|---|---|---|---|
| TPE-O | 5 | 70 | 5 | 50 |
| Elastomerpulver | 20 | 85 | 50 | 75 |
| Thermoplast (PP) | 0 | 50 | 0 | 30 |

Zur Herstellung eines erfindungsgemäßen mit wenigstens einem Elastomermaterial modifizierten thermoplastischen Materials kann ein Compoundieraggregat, beispielsweise der Firma Buss mit der Kennzeichnung MDK 46 Kneter L/D = 15, zum Einsatz kommen. Die Verfahrensparameter beim Compoundieren mit dem vorgenannten Compoundieraggregat können wie folgt eingestellt werden:

| | |
|---|---|
| Zone 1: | 180° |
| Zone 2: | 210° |
| Zone 3: | 220° |
| Schnecke: | 135° |
| Austragsschnecke: | 175° |

(fortgesetzt)

| | |
|---|---|
| Austragsgehäuse: | 190° |
| Düsenplatte: | 215° |
| Durchsatz: | 25 kg/h |

Ausführungsbeispiel

In der nachfolgenden Tabelle sind die mechanischen Eigenschaften von erfindungsgemäßen mit wenigstens einem Elastomermaterial modifizierten thermoplastischen Zusammensetzungen wiedergegeben.

| Rezepturbestandteile | | | Eigenschaften der Polymermischung | | |
|---|---|---|---|---|---|
| Elastomerpulvertyp | Thermoplasttyp | Anteil Elastomerpulver [Gew.-%] | Zugdehnung [%] | Zugfestigkeit [MPa] | Härte [Shore-A] |
| NR/SBR | PP (Adflex) / PP | 70 | 384 | 5,8 | 70 |
| EPDM | PP (Adflex) / PP | 70 | 779 | 5,5 | 65 |
| NR/SBR | PP (Adflex) | 70 | 416 | 5,4 | 70 |
| EPDM | PP (Softell) | 70 | 796 | 5 | 55 |

**Patentansprüche**

1. Elastomerpulvermodifizierte thermoplastische Zusammensetzung mit mindestens einem thermoplastischen Matrixmaterial und mindestens einem in das Matrixmaterial durch Schmelzemischen eingebundenen feinteiligen, vernetzten und pulverförmigen Elastomermaterial **dadurch gekennzeichnet, dass** das Elastomermaterial ausgewählt ist aus der Gruppe von vernetzten Elastomermaterialien mit einer zur Härte (X) des Matrixmaterials ähnlichen oder identischen Härte (Y), wobei die Härte (Y) des Elastomermaterials der allgemeinen Beziehung (I)

$$[X] - [Z] \leq [Y] \leq [X] + [Z] \qquad (I)$$

genügt, wobei

- [Y] die Shore-Härte des Elastomermaterials nach DIN 53505, angegeben in Shore-A, bezeichnet,
- [X] die Shore-Härte des Matrixmaterials nach DIN 53505, angegeben in Shore-A, bezeichnet und
- [Z] die Abweichung zwischen der Shore-Härte des Elastomermaterials und der Shore-Härte des Matrixmaterials, jeweils angegeben in Shore-A, bezeichnet mit [Z] ≤ 20

und wobei das Elastomermaterial eine Shore-Härte nach DIN 53505 von 30 bis 70 A aufweist.

2. Zusammensetzung nach Anspruch 1, **dadurch gekennzeichnet, dass** der Anteil des Elastomermaterials in der Zusammensetzung zwischen 20 bis 85 Gew.-% beträgt.

3. Zusammensetzung nach Anspruch 1 oder 2, **dadurch gekennzeichnet, dass** das Elastomermaterial ausgewählt ist aus der Gruppe der Olefin-Dien-Kautschuke und/oder der Styrol-Butadien-Kautschuke und/oder der Naturkautschuke und/oder deren Mischungen.

4. Elastomermodifizierte thermoplastische Zusammensetzung nach einem der vorhergehenden Ansprüche, **dadurch gekennzeichnet, dass** das thermoplastische Matrixmaterial gebildet wird durch einen Hauptthermoplasten und gegebenenfalls wenigstens einen Zusatzthermoplasten, wobei der Hauptthermoplast ausgewählt ist aus der Gruppe der thermoplastischen Elastomere auf Olefinbasis und wobei der gegebenenfalls wenigstens eine Zusatzthermoplast ausgewählt ist aus der Gruppe der Polyolefine.

**5.** Zusammensetzung nach Anspruch 4, **dadurch gekennzeichnet, dass** der Anteil des Hauptthermoplasten in der Zusammensetzung zwischen 5 bis 70 Gew.-% beträgt und/oder dass der Hauptthermoplast eine Shore-Härte nach DIN 53505 von weniger als 90 A aufweist.

**6.** Zusammensetzung nach Anspruch 4 oder 5, **dadurch gekennzeichnet, dass** der Anteil des Zusatzthermoplasten in der Zusammensetzung bis 50 Gew.-% beträgt.

**7.** Verfahren zur Herstellung einer elastomerpulvermodifizierten thermoplastischen Zusammensetzung mit mindestens einem thermoplastischen Matrixmaterial und mindestens einem in das Matrixmaterial eingebundenen feinteiligen, vernetzten und pulverförmigen Elastomermaterial, insbesondere wie in einem der Ansprüche 1 bis 6 beschrieben, durch Schmelzemischen mindestens eines feinteiligen, vernetzten und pulverförmigen Elastomermaterials in mindestens ein thermoplastisches Matrixmaterial, **dadurch gekennzeichnet, dass** das Elastomermaterial ausgewählt wird aus der Gruppe von vernetzten Elastomermaterialien mit einer zur Härte (X) des Matrixmaterials ähnlichen oder identischen Härte (Y), wobei die Härte (Y) des Elastomermaterials der allgemeinen Beziehung (I)

$$[X] - [Z] \leq [Y] \leq [X] + [Z] \qquad (I)$$

genügt, wobei

- [Y] die Shore-Härte des Elastomermaterials nach DIN 53505, angegeben in Shore-A, bezeichnet,
- [X] die Shore-Härte des Matrixmaterials nach DIN 53505, angegeben in Shore-A, bezeichnet und
- [Z] die Abweichung zwischen der Shore-Härte des Elastomermaterials und der Shore-Härte des Matrixmaterials, jeweils angegeben in Shore-A, bezeichnet mit $[Z] \leq 20$

und wobei das Elastomermaterial eine Shore-Härte nach DIN 53505 von 30 bis 70 A aufweist.

**8.** Verfahren nach Anspruch 7, **dadurch gekennzeichnet, dass** das Schmelzemischen in Abwesenheit von Vernetzern und/oder Kompatibilisatoren erfolgt.

**9.** Aus einer Zusammensetzung nach einem der vorhergehenden Ansprüche 1 bis 6 hergestelltes technisches Halb- oder Fertigfabrikat, mit einer Shore-Härte nach DIN 53505 zwischen 30 bis 80 A und mit einer Reißdehnung von mehr als 300 %.

**10.** Verschleißmaterial, insbesondere angespritzt an ein Trägermaterial, hergestellt aus einer Zusammensetzung nach einem der vorhergehenden Ansprüche 1 bis 6.

**Claims**

**1.** An elastomer powder modified thermoplastic composition containing at least one thermoplastic matrix material and at least one fine-particle, crosslinked and powdered elastomer material incorporated into the matrix material by melt mixing, **characterised in that** the elastomer material is selected from the group of crosslinked elastomer materials having a hardness (Y) of the elastomer material similar or identical to the hardness (X) of the matrix material, the hardness (Y) of the elastomer material satisfying the general relationship (I)

$$[X] - [Z] \leq [Y] \leq [X] + [Z] \qquad (I)$$

where

- [Y] denotes the Shore hardness of the elastomer material according to DIN 53505, given in Shore A,
- [X] denotes the Shore hardness of the matrix material according to DIN 53505, given in Shore A, and
- [Z] denotes the deviation between the Shore hardness of the elastomer material and the Shore hardness of the matrix material, in each case given in Shore A, with $[Z] \leq 20$

and where the elastomer material has a Shore hardness according to DIN 53505 from 30 to 70 A.

2. The composition according to claim 1, **characterised in that** the proportion of the elastomer material in the composition is between 20 and 85 % by weight.

3. The composition according to claim 1 or 2, **characterised in that** the elastomer material is selected from the group of olefin-diene rubbers and/or styrene-butadiene rubbers and/or natural rubbers and/or mixtures thereof.

4. The elastomer-modified thermoplastic composition according to one of the preceding claims, **characterised in that** the thermoplastic matrix material is formed by a main thermoplast and optionally by at least one auxiliary thermoplast, the main thermoplast being selected from the group of olefin-based thermoplastic elastomers and the optional at least one auxiliary thermoplast being selected from the group of polyolefins.

5. The composition according to claim 4, **characterised in that** the proportion of the main thermoplast in the composition is between 5 and 70 % by weight, and/or **in that** the main thermoplast has a Shore hardness according to DIN 53505 of less than 90 A.

6. The composition according to claim 4 or 5, **characterised in that** the proportion of the additional thermoplast in the composition is up to 50 % by weight.

7. A method for producing an elastomer powder modified thermoplastic composition containing at least one thermoplastic matrix material and at least one fine-particle, crosslinked and powdered elastomer material incorporated into the matrix material, in particular as described in one of claims 1 to 6, by melt mixing of at least one fine-particle, crosslinked and powdered elastomer material into at least one thermoplastic matrix material, **characterised in that** the elastomer material is selected from the group of crosslinked elastomer materials having a hardness (Y) similar or identical to the hardness (X) of the matrix material, the hardness (Y) of the elastomer material satisfying the general relationship (I)

$$[X] - [Z] \leq [Y] \leq [X] + [Z] \qquad (I)$$

where

- [Y] denotes the Shore hardness of the elastomer material according to DIN 53505, given in Shore A,
- [X] denotes the Shore hardness of the matrix material according to DIN 53505, given in Shore A, and
- [Z] denotes the deviation between the Shore hardness of the elastomer material and the Shore hardness of the matrix material, in each case given in Shore A, with $[Z] \leq 20$

and where the elastomer material has a Shore hardness according to DIN 53505 from 30 to 70 A.

8. The method according to claim 7, **characterised in that** the melt mixing is carried out in the absence of crosslinking agents and/or compatibilising agents.

9. A technical semi-finished or finished product produced from a composition according to one of preceding claims 1 to 6, having a Shore hardness according to DIN 53505 between 30 and 80 A and having an elongation at break of more than 300 %.

10. A heard-wearing material, in particular injected onto a substrate, produced from a composition according to one of preceding claims 1 to 6.

**Revendications**

1. Composition thermoplastique modifiée par poudre élastomère avec au moins une matière thermoplastique formant matrice et au moins une matière élastomère à particules fines, réticulée et pulvérulente, intégrée dans la matière formant matrice par mélange de la masse fondue, **caractérisée en ce que** la matière élastomère est choisie dans le groupe des matières élastomères réticulées avec une dureté (Y) analogue ou identique à la dureté (X) de la matière formant matrice, la dureté (Y) de la matière élastomère satisfaisant à la relation générale (I)

$$[X] - [Z] \le [Y] \le [X] + [Z] \qquad (I)$$

- Y désignant la dureté Shore de la matière élastomère selon DIN 53505, indiquée en Shores A,
- [X] désignant la dureté Shore de la matière formant matrice selon DIN 53505, indiquée en Shores A,
- [Z] désignant l'écart entre la dureté Shore de la matière élastomère et la dureté Shore de la matière formant matrice, chacune indiquée en Shores A, avec [Z] ≤ 20

et la matière élastomère présentant une dureté Shore selon DIN 53505 de 30 à 70 A.

2. Composition selon la revendication 1, **caractérisée en ce que** la part de la matière élastomère dans la composition est de 20 à 85 % en poids.

3. Composition selon la revendication 1 ou 2, **caractérisée en ce que** la matière élastomère est choisie dans le groupe des caoutchoucs oléfine-diène et/ou des caoutchoucs styrène-butadiène et/ou des caoutchoucs naturels et/ou de leurs mélanges.

4. Composition thermoplastique modifiée par élastomère selon l'une quelconque des revendications précédentes, **caractérisée en ce que** la matière thermoplastique formant matrice est formée par une matière thermoplastique principale et éventuellement au moins une matière thermoplastique supplémentaire, la matière thermoplastique principale étant choisie dans le groupe des élastomères thermoplastiques sur base d'oléfine et la matière thermoplastique supplémentaire éventuelle étant choisie dans le groupe des polyoléfines.

5. Composition selon la revendication 4, **caractérisée en ce que** la part en matière thermoplastique principale dans la composition est de 5 à 70 % en poids et/ou **en ce que** la matière thermoplastique principale présente une dureté Shore selon DIN 53505 inférieure à 90 A.

6. Composition selon la revendication 4 ou 5, **caractérisée en ce que** la part en matière thermoplastique supplémentaire dans la composition est de jusqu'à 50 % en poids.

7. Procédé de production d'une composition thermoplastique modifiée par élastomère avec au moins une matière thermoplastique formant matrice et au moins une matière élastomère à particules fines, réticulée et pulvérulente, intégrée dans la matière formant matrice, notamment telle que décrite dans l'une quelconque des revendications 1 à 6, **caractérisé en ce que** la matière élastomère est choisie dans le groupe des matières élastomères réticulées avec une dureté (Y) analogue ou identique à la dureté (X) de la matière formant matrice, la dureté (Y) de la matière élastomère satisfaisant à la relation générale (I)

$$[X] - [Z] \le [Y] \le [X] + [Z] \qquad (I)$$

- Y désignant la dureté Shore de la matière élastomère selon DIN 53505, indiquée en Shores A,
- [X] désignant la dureté Shore de la matière formant matrice selon DIN 53505, indiquée en Shores A,
- [Z] désignant l'écart entre la dureté Shore de la matière élastomère et la dureté Shore de la matière formant matrice, chacune indiquée en Shores A, avec [Z] ≤ 20

et la matière élastomère présentant une dureté Shore selon DIN 53505 de 30 à 70 A.

8. Procédé selon la revendication 7, **caractérisé en ce que** le mélange de la masse fondue s'effectue en présence d'agents réticulants et/ou d'agents compatibilisants.

9. Produit semi-fini ou fini fabriqué à partir d'une composition selon l'une quelconque des revendications précédentes 1 à 6, avec une dureté Shore selon DIN comprise entre 30 et 80 A et avec une élongation à la rupture supérieure à 300 %.

**10.** Matière d'usure, notamment injectée sur une matière support, fabriquée à partir d'une composition selon l'une quelconque des revendications précédentes 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29515721 U1
- DE 19607281 A1
- DE 19923758 A1
- EP 1627014 B1
- DE 102006014985 A1
- EP 1885027 A1
- US 20080103244 A1
- US 200103768 A1
- US 20090270545 A1
- EP 0976783 A1
- US 6147160 A
- WO 9739059 A1
- US 2006241234 A1